# EUROPEAN PATENT APPLICATION

(11) **EP 1 167 006 A1**
(43) Date of publication of application: **02.01.2002**
(21) Application number: 01202324.8
(22) Date of filing: 12.06.2001
(51) Int. Cl.: B30B 9/30, B29C 44/56, B30B 7/04

(54) **Apparatus intended for pressing blocks from foam flocks, and method for pressing blocks from foam flocks**

(30) Priority: 13.06.2000 NL 1015424
(71) Applicant: Recticel Nederland B.V., 4041 CL Kesteren (NL)
(72) Inventor: Lievestro, Robert, 6662 CC Elst (NL); Martens, Johannes, 6665 AE Driel (NL)
(74) Representative: Prins, Adrianus Willem

(57) **Abstract**

An apparatus for pressing blocks from foam flocks, optionally supplemented with another material, which apparatus is provided with a pressing unit (1), which pressing unit (1) is provided with a bottom wall, two sidewalls and a number of pressing stamps (7), the pressing unit (1) being provided with only two, opposite pressing stamps (7) movable away from and towards each other substantially in horizontal direction. The invention also relates to a method for pressing blocks from foam flocks, optionally supplemented with another material, wherein an amount of foam flocks is introduced into a pressing unit (1) and the foam flocks are compressed by a number of pressing stamps (7), and wherein the compression of the foam flocks is carried out in that only two, opposite pressing stamps (7) are moved in a substantially horizontal direction from a position wherein they are moved apart to a position wherein they are moved towards each other.

## Description

The invention relates to an apparatus for pressing blocks from foam flocks, optionally supplemented with another material, which apparatus is provided with a pressing unit, which pressing unit is provided with a bottom wall, two sidewalls and a number of pressing stamps.

The invention also relates to a method for pressing blocks from foam flocks, optionally supplemented with another material, wherein an amount of foam flocks is introduced into a pressing unit, and wherein the foam flocks are compressed by a number of pressing stamps.

Such an apparatus and method are known from German Utility Model DE 298 10 967 U1. The known apparatus is provided with three pressing stamps: two which are arranged to be movable away from and towards each other in a horizontal direction, and one which is arranged to be movable up and down in a vertical direction. The foam flocks are pressed in the pressing unit by two consecutive pressing motions of the pressing stamps. The pressing stamps can be moved, for instance, by a drive, for instance a mechanical, pneumatic or hydraulic drive. The first pressing motion proceeds in a horizontal direction, and the second pressing motion proceeds in a vertical direction. Normally, a binding agent is mixed with the flocks to be pressed. Next, after pressing, the flocks are wetted with steam, so that the binding agent is activated and the flocks in compressed condition adhere to each other to form a solid block. The blocks can be used, for instance, to make mattresses, or heat and/or sound insulating plates. The foam flocks to be pressed can consist, for instance, of a plastic foam such as polyurethane foam. The flocks can be a waste product of a plastic foam treatment or process, or originate from plastic foam recycling. Use can also be made, for instance, of prepolymers. Further, the flocks are optionally supplemented with another material, such as textile fibers, cork, and/or rubber, through which particular desired properties of the block to be pressed can be implemented, for instance a particular elasticity, strength, porosity and/or water repellent properties.

The known apparatus and method have a number of disadvantages. In the first place, the vertical pressing motion requires that a part of the apparatus extends in the height direction. As a result, a relatively high, and hence costly, space is needed to install the apparatus in. Moreover, such a relatively high apparatus is disadvantageous with regard to operation and maintenance, because parts of the apparatus may be difficult to access for operating personnel.

A second disadvantage of the known apparatus and method relates to the density of the pressed blocks. It is normally desired that each block has a density as homogeneous as possible, so that all parts of the block have the same desired properties. These properties can be, for instance, hardness, strength, elasticity and/or heat conductivity. The homogeneity of the block is determined *inter alia* by the distribution of the pressure exerted by the different pressing plates on the foam flocks during the pressing of the block. In the vertical pressing operation of the known apparatus and method, only one pressing stamp is used, so that the pressure is distributed asymmetrically across the foam flocks to be compressed. This yields a block whose density exhibits a certain degree of inhomogeneity in vertical direction.

A third disadvantage is the complexity of the known apparatus. In fact, the apparatus employs two pressing operations in two different directions. The pressing stamps of the horizontal pressing operation, in a position when moved towards each other, are then preferred to align closely with the pressing stamp of the vertical pressing operation, so that no foam flocks escape from the vertical pressing operation. Making the two pressing motions align closely requires a relatively complex design of the apparatus. Moreover, the apparatus, due to the use of two pressing operations, consists of a relatively large number of parts, which renders the apparatus relatively costly in purchase and use, and comparatively susceptible to failure. In addition, pressing by means of two pressing operations takes relatively much time, which adversely affects the productivity of the machine.

The object of the present invention is to eliminate the disadvantages of the known apparatus and method, while maintaining the advantages thereof. The invention accordingly provides an apparatus whose parts are well accessible to personnel, and which enables the pressing of blocks having a relatively high homogeneity, while a relatively high degree of complexity of the apparatus is avoided.

To that end, the apparatus of the type described in the preamble is characterized, according to the invention, in that the pressing unit is provided with only two, opposite pressing stamps movable away from and towards each other substantially in horizontal direction.

In use, the two pressing stamps compress the foam flocks in a single pressing operation in a substantially horizontal direction. Pressing blocks of a desired end volume can thus be done relatively fast, because no other pressing operations are used to achieve this volume. Moreover, the necessity is eliminated for the apparatus to be provided with vertically extending parts which are needed when a vertical pressing operation employed. As a consequence, the apparatus according to the present invention can be made of relatively low design, so that the apparatus can be accommodated in a relatively low, inexpensive space, and is relatively friendly in maintenance compared with an apparatus utilizing pressing operations in different directions.

According to a further elaboration of the invention, the pressing unit is provided with a closable filling opening for the purpose of filling at least the pressing unit with foam flocks, with the pressing stamps in a moved-apart position, which filling opening is situated at an upper side of the pressing unit.

Via the filling opening, the pressing unit, before pressing is started, can be filled from above with foam flocks. Preferably, the pressing unit is then filled completely each time, which is beneficial to the homogeneity of the blocks to be pressed. The filling opening can be provided with a lid, which lid, according to a further elaboration of the invention, can be an articulated lid. Such an articulated lid can be swung open in a relatively low space. It will be clear that the lid can also be arranged to be slid or lifted.

According to an advantageous elaboration of the invention, the pressing unit can be provided with two pressing walls, which are arranged to be movable away from and towards each other with the aid of the pressing stamps, while the pressing walls, at least in a position when moved towards each other, can be locked to sidewalls of the pressing unit.

Thus, the foam flocks can remain compressed between the pressing walls moved towards each other, while a drive of the pressing stamps is switched off, which saves the energy required for the drive. Preferably, the pressing walls are lockable at different distances from each other, so that blocks of different sizes can be manufactured utilizing the locking of the pressing walls.

According to a further elaboration, the apparatus can be provided with at least one pressing mold, which pressing mold is receivable in and removable from the pressing unit, the pressing mold being provided with a bottom part, a lid part and two sidewall parts, which, in a condition when received in the pressing unit, respectively form part of the bottom, the lid and the sidewalls of the pressing unit, each pressing unit being provided with two of the pressing walls mentioned, which are lockable to the sidewall parts.

Because the pressing mold is adapted to be uncoupled from the remainder of the pressing unit, the pressing mold, after an amount of foam flocks has been compressed in the pressing mold, can be displaced, for instance, to another handling apparatus, such as a wetting device for the purpose of adhesion of compressed foam flocks, a cutting, sawing or packaging device, and the like. A number of these pressing molds can be used to obtain a relatively high productivity of the apparatus. To that end, a first pressing mold, for instance, can be situated in the pressing unit to press a block in it, while other pressing molds have been brought to other handling equipment for further handling of pressed foam flocks or blocks contained in these pressing molds.

Preferably, the apparatus is provided with transport means for the purpose of displacing the pressing molds.

Transport means facilitate the transport of the pressing mold for operating personnel. The pressing mold can be provided with the transport means, such as, for instance, wheels fitted under the pressing mold.

According to a further elaboration of the invention, at least the bottom part of the or each pressing mold is provided with fluid supply means for the purpose of supplying fluid to the inner space enclosed by the pressing mold with the two pressing plates in the position when moved towards each other.

The mutual adhesion of the foam flocks is normally achieved by wetting them with steam, which can be done in a simple manner with the aid of the fluid supply means. The foam flocks have been pre-treated with a binding agent, which is activated by the steam supplied.

According to an advantageous elaboration of the invention, a sidewall part and the two pressing walls are coupled to upper parts of the pressing mold, such that in use, when the lid part and the wall parts mentioned are being lifted, these walls, at an underside thereof, swing away from a mold inner space.

Thus, the lid part, together with these wall parts, can be removed relatively simply and fast from the bottom part of the mold for the purpose of removing a pressed block from the mold.

Preferably, the height of an inner space enclosed by the pressing unit has a value in the range of 75 to 250 centimeters.

At this height, the apparatus can be made of relatively low design, so that all parts of the apparatus are well accessible to operating personnel. Moreover, the apparatus can be installed in a relatively low, inexpensive space.

According to an advantageous elaboration of the invention, the pressing stamps, in a position when moved towards each other, are at a mutual distance whose value is in the range of 75 to 300 centimeters.

With this range, blocks can be made which are useful for many applications, for instance mattresses of different current sizes.

According to a further elaboration of the invention, the apparatus is provided with a weighing device for the purpose of weighing the weight of the pressing unit, which may or may not be filled with foam flocks.

With the aid of the weighing device, in a relatively simple manner, the total weight can be measured of an amount of foam flocks with which the pressing unit is filled. This makes it possible for the pressing unit to be filled both by a continuous filling method and by a batch filling method, which makes for flexible deployability of the pressing unit.

The present invention further provides a method according to the preamble, characterized in that compression of the foam flocks is carried out in that only two, opposite pressing stamps are moved in a substantially horizontal direction from a position wherein they are moved apart to a position wherein they are moved towards each other.

With this method, blocks of a relatively high homogeneity can be pressed, while a relatively high degree of complexity of the apparatus can be avoided.

According to a further elaboration, the pressing unit is filled completely with foam flocks while the pressing stamps are in the moved-apart position.

In this way, the foam flocks can be uniformly compressed, with the foam flocks hardly moving in vertical direction to fill voids in the pressing unit. This is beneficial to the homogeneity of the blocks to be pressed.

Preferably, the two pressing stamps are moved towards each other at substantially the same speed.

Thus, the two pressing stamps apply substantially the same pressure to the foam flocks during pressing, which is desired to press a block as homogeneously as possible.

According to an advantageous elaboration of the present invention, the mutual distance between the two pressing stamps, at least when the pressing stamps are in the position when moved towards each other, is varied for successive pressing runs of blocks, so that the volumes of the successively pressed blocks are different.

As a consequence, blocks of different dimensions can be manufactured, so that the manufacturer of the blocks can tune his production to the demand for blocks of different dimensions.

Preferably, the mutual distance between the pressing stamps in the moved-apart position is determined by the desired density of the blocks to be pressed.

As a consequence, the desired density of the blocks is not determined by the distance between the two pressing stamps when they are in the position moved towards each other, so that a number of blocks of the same size can be pressed, while these blocks can differ in density. The mutual distance between the pressing plates in the moved-apart position is then the measure for the amount of foam flocks with which the pressing unit can be filled, and hence determinative of the density of the pressed blocks.

After the flocks have been compressed, these flocks can be adhered to each other. This can be done, for instance, in a separate wetting device, with the pressing mold removed from the pressing unit, so that with the aid of a second, empty pressing mold a new block can be pressed.

To clarify the present invention, an exemplary embodiment will be described with reference to the drawing. In the drawing:
Fig. 1 shows a top plan view of an exemplary embodiment of the invention, with three pressing molds located outside the pressing unit;
Fig. 2 shows a side elevation of the top plan view represented in Fig. 1, with a single pressing mold located outside the pressing unit;
Fig. 3 shows a side elevation of a pressing mold of the exemplary embodiment represented in Fig. 1;
Fig. 4 shows a top plan view of the side elevation shown in Fig. 3;
Fig. 5 shows a front view of the side elevation represented in Fig. 3;
Fig. 6 shows a similar side elevation to Fig. 3, with the lid part with sidewalls and pressing walls lifted off the pressing mold;
Fig. 7 shows a front view of the side elevation represented in Fig. 6;
Fig. 8 shows a top plan view of the pressing mold without lid part, sidewalls and pressing walls, with wetting means represented in the bottom of the pressing mold;
Fig. 9 shows a side elevation of the top plan view represented in Fig. 8;
Fig. 10 shows a detail X of the side elevation represented in Fig. 9;
Fig. 11 shows a front view of the side elevation represented in Fig. 8;
Fig. 12 shows a top plan view of a pressing unit of the exemplary embodiment represented in Fig. 1;
Fig. 13 shows a front view of the top plan view represented in Fig. 12;
Fig. 14 shows two positions of a pressing stamp in the pressing unit of the front view represented in Fig. 13; and
Fig. 15 shows a cross-sectional view along line XV-XV of the top plan view represented in Fig. 12, with the lid parts represented in two positions.

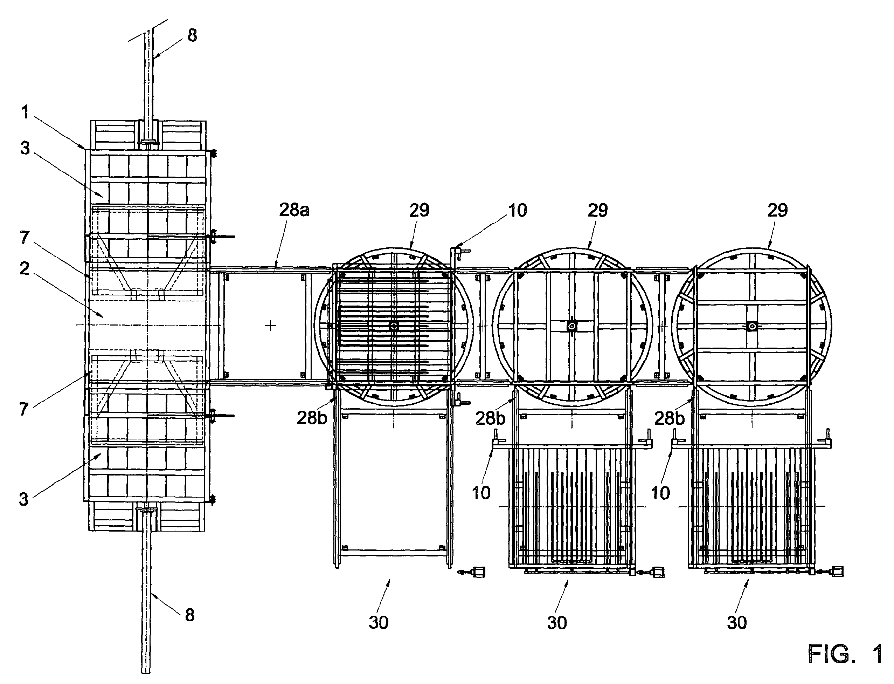

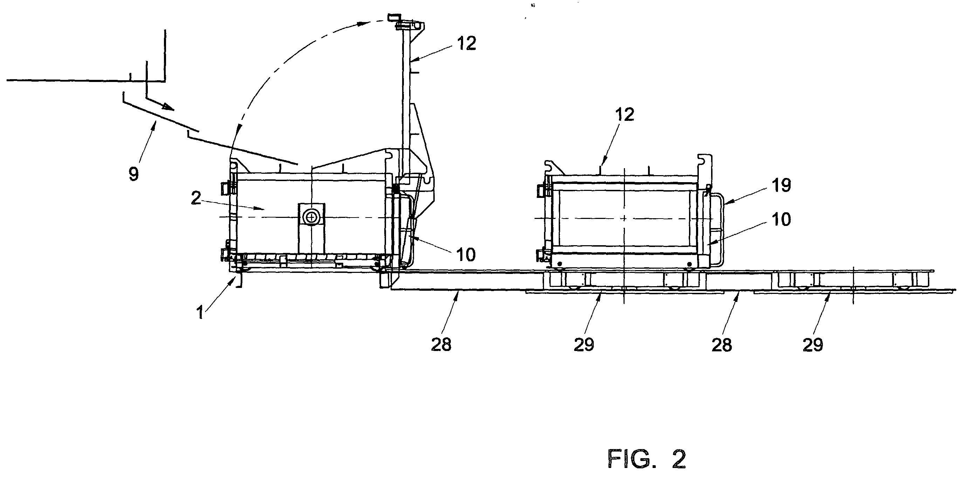

The exemplary embodiment represented in Figs. 1 and 2 comprises an apparatus for pressing blocks B from foam flocks, which apparatus is provided with a pressing unit 1, three pressing molds 10 and three finishing or storage stations 30. The pressing molds 10 can be displaced between the pressing unit 1 and finishing or storage stations 30 in that they are movably arranged on rails 28. In the rails, three rail turning stations 29 are arranged, with which the direction of movement of the pressing molds 10 can be changed, so that each pressing mold 10 can be transferred from a first rail part 28a to one of three second rail parts 28b, leading to the rail turning stations 29. The first rail part 28a extends as far as a central part of the pressing unit 1, which central part comprises a pressing mold space 2 accessible from the rail 28a, in which space 2 one of the pressing molds 10 can be received. In Fig. 1, the pressing mold space 2 is empty, while in Fig. 2 a pressing mold 10 has been placed in the pressing mold space 2. The apparatus further comprises foam flock filling means 9, with which the pressing mold 10 in the pressing mold space 2 can be filled from above with foam flocks.

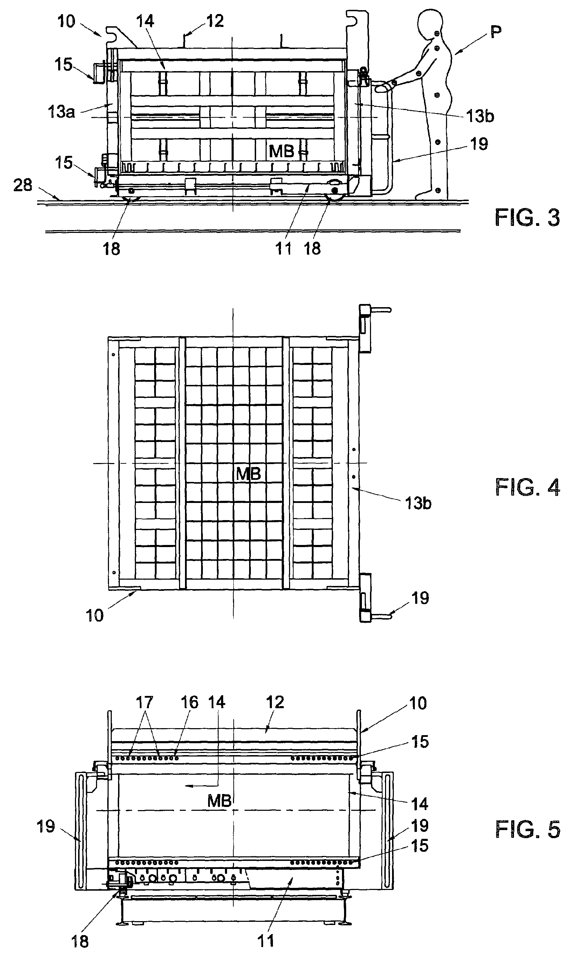

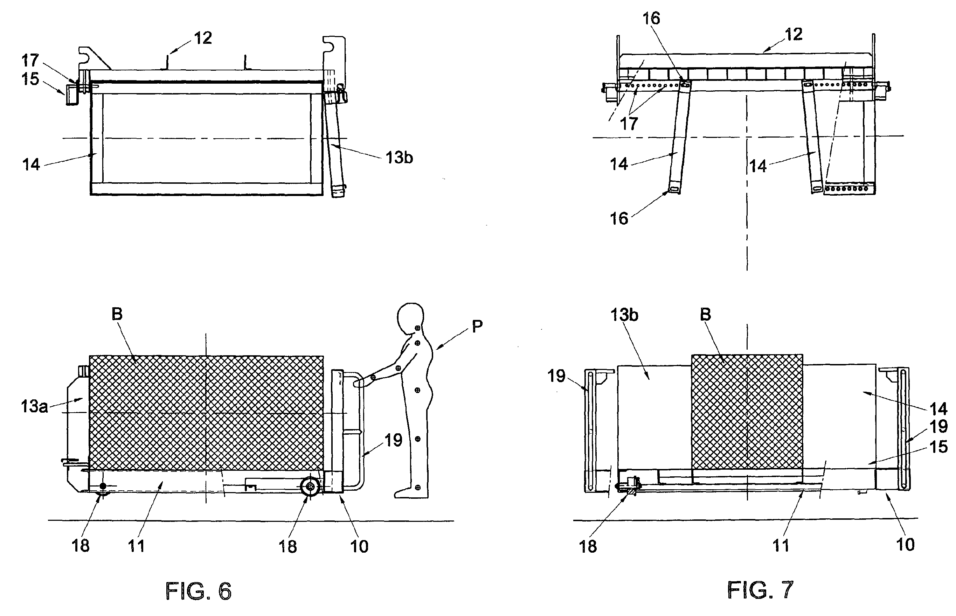

Figs. 3-7 show the pressing mold 10 separately. The pressing mold 10 is provided with a bottom 11, a lid part 12, a first and second sidewall 13a and 13b, respectively, and pressing walls 14. In a mounted condition, the two sidewalls 13a, 13b are situated opposite each other, and the pressing walls 14 extend between the sidewalls 13a, 13b. The first sidewall 13a is connected at right angles to the bottom 11. The second sidewall 13b and the lid part 12 are pivotally connected to each other. The lid part 12 with the sidewall 13b on the one hand, and the bottom 11 and the sidewall 13a on the other, are detachably connected with each other, so that the lid part 12 can be detached from the pressing mold 10, as shown in Figs. 6 and 7. The pressing walls 14 are detachably locked to the sidewalls in the pressing mold 10 with the aid of locking pins 15, extending from an outer side via passages 17 of the sidewalls 13a, 13b in locking slots 16 of the pressing walls 14. Preferably, the pressing walls 14 can be locked at a mutual distance in the range of 75 to 300 centimeters. The bottom 11 is provided with four wheels 18, with which the pressing mold 10 can be moved over the rail 28. Further, the second sidewall 13b is provided on the outside thereof with brackets 19 for a worker P to push or pull the pressing mold 10 in motion over the rails 28.

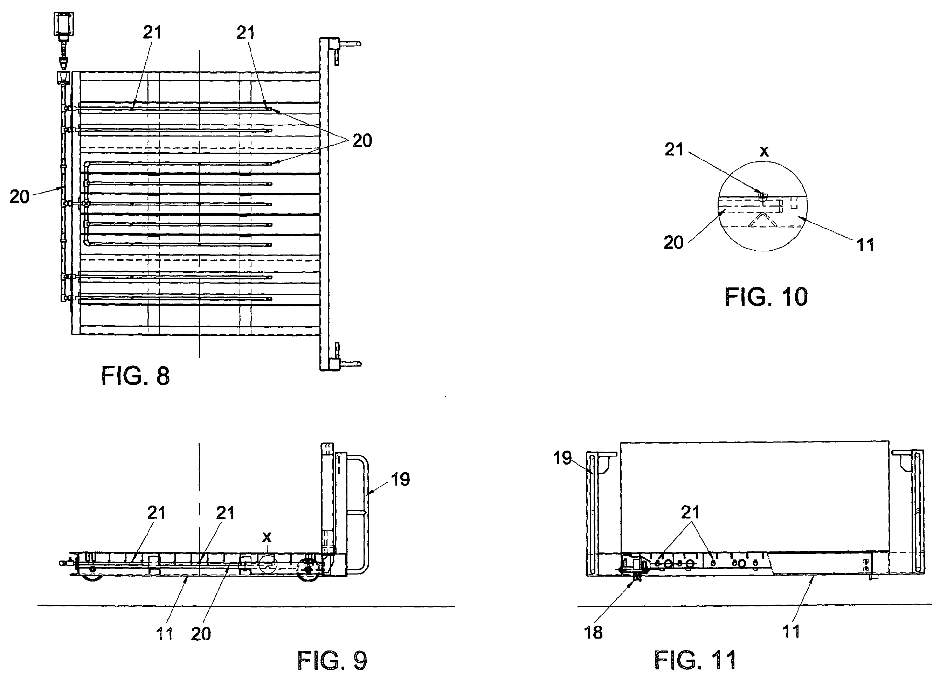

In Figs. 8-11, wetting means 20-21 are represented, which are situated in the bottom 11 of the pressing mold 10. The wetting means comprise fluid supply lines 20 provided with wetting orifices 21. The fluid supply lines 20 are operatively coupled to a fluid source (not shown) to feed fluid to an inner space MB enclosed by the pressing mold 10, for the purpose of mutually adhering compressed foam flocks.

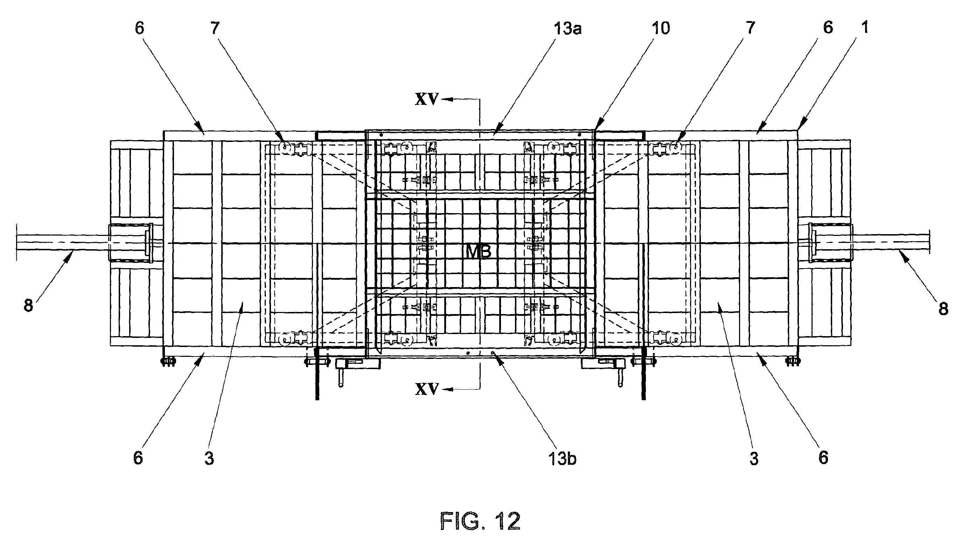

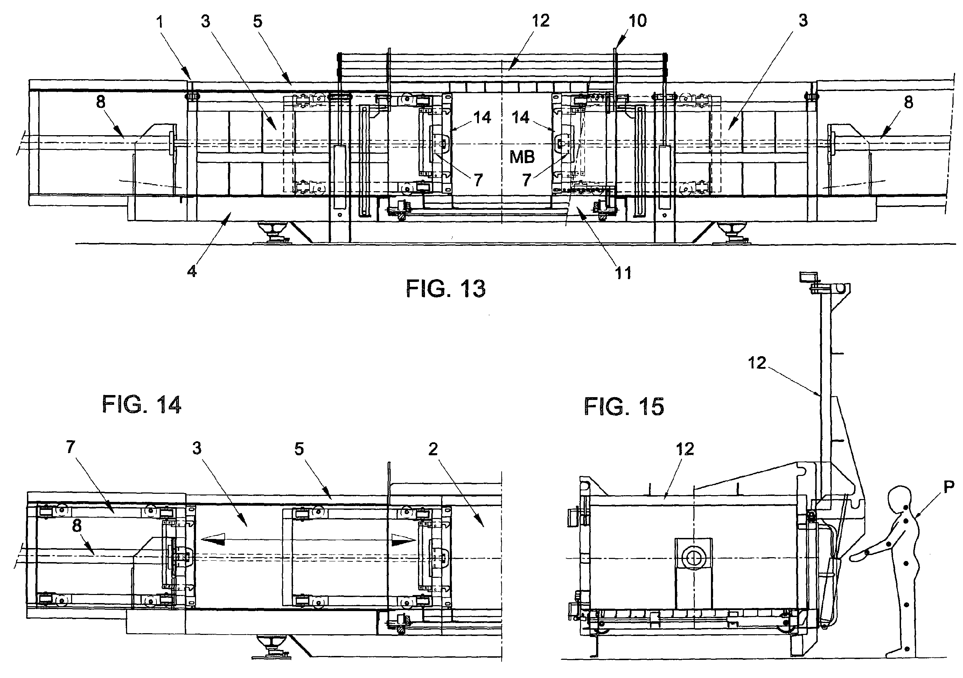

Figs. 12-15 show the pressing unit 1, with a pressing mold 10 received in the pressing mold space 2. The bottom 11, and the sidewalls 13a, 13b of the pressing mold 10 then align with a bottom 4, and sidewalls 6 of the pressing unit 1. Because the lid part 12 of the pressing mold 10 is pivotally connected with the sidewall 13b, the lid part 12 can be in an open or closed position as represented in Figs. 2 and 15. The lid part 12 of the pressing mold 10 links up with two pivotal lid parts 5 of the pressing unit 1, and is operatively coupled to these lid parts 5. The pressing unit 1 is provided with two pressing stamps 7 which are horizontally movably arranged opposite each other in a filling space 3 enclosed by the lid parts 5, 12, sidewalls 6, 13 and bottom 4, 11 of the pressing unit 1 and pressing mold 10. This filling space 3 preferably has a height in the range of 75 to 250 centimeters. The filling space 3 comprises the mold inner space MB. In Fig. 14, two positions of one of the pressing stamps 7 are represented, viz. a first position, moved away from the pressing mold space 2, and a second position, moved towards the pressing mold space 2. In the second position, the pressing stamps 7 can be coupled to the pressing walls 14 of the pressing mold 10 with the aid of coupling means, not shown. Coupled to each pressing stamp 7 is a driving cylinder 8, which couples the pressing stamp 7 to a drive, not shown. The drive can be, for instance, a hydraulic or pneumatic drive, or a gear drive. The pressing unit 1 can be arranged on a weighing device for the purpose of weighing the weight of the pressing unit.

The exemplary embodiment represented in the drawings is used as follows. In the pressing mold space 2, a pressing mold 10 is coupled to the pressing unit 1, such that the bottom part 11, the lid part 12 and the sidewalls 13a, 13b of the pressing mold 10 align with the bottom 4, lid parts 5 and sidewalls 6 of the pressing unit 1. Then the pressing walls 14 are coupled to the pressing stamps 7 to be subsequently uncoupled from the other walls 11, 12, 13 of the pressing mold 10 by sliding the locking pins 15 out of the locking slots 16. The pressing walls 14 are then moved apart to a filling position, with the whole filling space 3 or a part thereof situated between the pressing walls 14. This filling space 3 is made accessible from above by opening the coupled lid parts 5, 12 of the pressing unit 1 and pressing mold 10. Thereupon the filling space 3 can be filled with foam flocks with the aid of the foam flock filling means 9. Preferably, this filling space 3 is filled completely, which is beneficial to homogeneous pressing.

The density of the block B to be pressed is determined for an important part by the mutual distance between the pressing walls 14 in the moved-apart position. A relatively large distance is chosen in order that the total filling space has a relatively large volume to be filled with a large amount of flocks. A relatively high density of the block B can thereby be obtained. Conversely, a relatively low density is obtained by choosing the distance between the pressing walls 14 in the moved-apart position to be relatively small.

After filling, the coupled lid parts 5, 12 are closed. The foam flocks are subsequently compressed by moving the pressing walls 14 towards each other, the two pressing walls 14 being preferably moved at the same speed. The mutual distance between the pressing walls 14 when moved towards each other in this pressing position depends on the desired block volume of the block B. The distance can be set in the range of 75 to 300 centimeters. The pressing walls 14 are locked in this pressing position with the aid of the locking pins 15. Thereafter, fluid can be supplied to the fluid lines 20 of the pressing mold 10 so as to bind the foam flocks to form a solid block B. The pressing mold 10 is then uncoupled from the pressing unit 1 by a worker P and moved via the rails 28 and rail turning stations 29 to a finishing or storage station 30 for subsequent processing steps. Wetting the compressed foam flocks can also be done after the pressing mold 10 has been uncoupled from the pressing unit 1 and removed.

As represented in Figs. 6 and 7, the sidewall part 13b and the two pressing walls 14 are coupled to upper parts of the pressing mold 10, such that when the lid part 12 and the wall parts 13b, 14 are being lifted, these walls 13b, 14, at an underside thereof, swing away from the mold inner space MB. In Figs. 6 and 7, the lid part 12, the pressing walls 14 and the sidewall part 13b are lifted relatively far, so that the block B can be removed. It is also possible, however, that one of the sidewalls is designed to be swung up so that it can assume a horizontal position. In that embodiment, the lid part 12, the pressing walls 14 and the sidewall part 13b need to be lifted only a little, whereafter the sidewall part is swung up, so that subsequently the block B can be removed. Thus, demolding the block B can be carried out in a relatively low space.

It will be understood that the present invention is not limited to the exemplary embodiment described, but that various modifications are possible within the scope of the invention.

Thus, the pressing mold 10 and the pressing unit 1 can be designed in different shapes, so that blocks B of different shapes can be pressed, for instance circular, elliptical or angular blocks B, or a combination of these or other shapes.

Further, the apparatus can be provided with different transport means to move the pressing molds 10, for instance rails 28, hoisting means, sliding means, automated or hand-operated transport means. The pressing mold 10 can also be an undetachable part of the pressing unit 1.

In addition, the apparatus can be provided with a foam flock storage reservoir, while foam flock filling means 9 can comprise, for instance, an operable flap in a bottom of the reservoir under which is arranged a foam flock slideway. The filling means 9 can be provided with a conveyor, a controllable crane with a foam flock gripper, or other transport means.

## Claims

1. An apparatus for pressing blocks from foam flocks, optionally supplemented with another material, which apparatus is provided with a pressing unit, which pressing unit is provided with a bottom wall, two sidewalls and a number of pressing stamps, **characterized in that** the pressing unit (1) is provided with only two, opposite pressing stamps (7) movable away from and towards each other substantially in horizontal direction.

2. An apparatus according to claim 1, **characterized in that** the pressing unit (1) is provided with a closable filling opening for the purpose of filling at least the pressing unit (1) with foam flocks, with the pressing stamps (7) in a position moved away from each other, which filling opening is situated at an upper side of the pressing unit (1).

3. An apparatus according to claim 2, **characterized in that** the filling opening is provided with a lid (5, 12).

4. An apparatus according to claim 3, **characterized in that** the lid (5, 12) is an articulated lid.

5. An apparatus according to any one of the preceding claims, **characterized in that** pressing unit (1) is provided with two pressing walls (14), which are arranged to be movable away from and towards each other with the aid of the pressing stamps (7), while the pressing walls (14), at least in a position moved towards each other, are lockable to sidewalls (6, 13) of the pressing unit (1).

6. An apparatus according to claim 5, **characterized in that** the two pressing walls (14) are lockable at different distances from each other.

7. An apparatus according to at least claim 5, **characterized in that** the apparatus is provided with at least one pressing mold (10), which pressing mold (10) is receivable in and removable from the pressing unit (1), while the pressing mold (10) is provided with a bottom part (11), a lid part (12) and two sidewall parts (13), which, in a condition when received in the pressing unit, form part of, respectively, the bottom (4), the lid (5) and the sidewalls (6) of the pressing unit (1), while each pressing mold (10) is provided with two said pressing walls (14), which are lockable to said sidewall parts (13).

8. An apparatus according to claim 7, **characterized by** transport means (18, 28, 29) for the purpose of displacing the at least one pressing mold (10).

9. An apparatus according to claim 8, **characterized in that** the or each pressing mold (10) is provided with transport means (18).

10. An apparatus according to any one of claims 7-9, **characterized in that** at least the bottom part (11) of the or each pressing mold (10) is provided with fluid supply means (20, 21) for the purpose of supplying fluid to the inner space (MB) enclosed by the pressing mold (10), with the two pressing plates (14) in the position moved towards each other.

11. An apparatus according to any one of claims 7-10, **characterized in that** a sidewall part (13b) and the two pressing walls (14) are coupled to upper parts of the pressing mold (10), such that in use, when the lid part (12) and said wall parts (13b, 14) are being lifted, these walls (13b, 14), at an underside thereof, swing away from the mold inner space (MB).

12. An apparatus according to any one of the preceding claims, **characterized in that** the height of the inner space (3, MB) enclosed by the pressing unit (1) has a value in the range of 75 to 250 centimeters.

13. An apparatus according to any one of the preceding claims, **characterized in that** the two pressing stamps (7), in a position moved towards each other, are at a mutual distance whose value is in the range of 75 to 300 centimeters.

14. An apparatus according to any one of the preceding claims, **characterized in that** the apparatus is provided with a weighing device for the purpose of weighing the weight of the pressing unit (1), which may or may not be filled with foam flocks.

15. A method for pressing blocks from foam flocks, optionally supplemented with another material, wherein an amount of foam flocks is introduced into a pressing unit and the foam flocks are compressed by a number of pressing stamps, **characterized in that** the compression of the foam flocks is carried out **in that** only two, opposite pressing stamps (7) are moved in a substantially horizontal direction from a position wherein they are moved apart to a position wherein they are moved towards each other.

16. A method according to claim 15, **characterized in that** the pressing unit (1) is filled completely with foam flocks while the two pressing stamps (7) are in a position wherein they are moved apart.

17. A method according to claim 15 or 16, **characterized in that** the two pressing stamps (7) are moved towards each other at substantially the same speed.

18. A method according to any one of claims 15-17, **characterized in that** the mutual distance between the two pressing stamps (7), at least when the pressing stamps (7) are in the position wherein they are moved towards each other, is varied for successive pressing runs of blocks (B), so that the volumes of the successively pressed blocks (B) are different.

19. A method according to any one of claims 15-18, **characterized in that** the mutual distance between the two pressing stamps (7) in the position wherein they are moved apart is determined by the desired density of the blocks (B) to be pressed.
